# EUROPÄISCHE PATENTANMELDUNG

(11) **EP 4 807 202 A1**
(43) Veröffentlichungstag der Anmeldung: **16.09.2026**
(21) Anmeldenummer: 25163671.8
(22) Anmeldetag: 13.03.2025
(51) Int. Cl.: F16B 21/18

(54) **INTERLOCK-RING**

(71) Anmelder: Seeger-Orbis GmbH, 61462 Königstein (DE)
(72) Erfinder: Steiger, Jan, 55270 Essenheim (DE)
(74) Vertreter: Hoffmann Eitle

(57) **Zusammenfassung**

Die Erfindung betrifft einen Sicherungsring zur Sicherung eines Bauteils auf einer Welle, wobei der Sicherungsring ein erstes Ende und ein zweites Ende umfasst, wobei zwischen dem ersten Ende und dem zweiten Ende eine Lücke ist, wobei der Sicherungsring mindestens ein Federelement umfasst.

## Beschreibung

### GEBIET DER ERFINDUNG

Die Erfindung betrifft einen Sicherungsring zur Sicherung eines Bauteils auf einer Welle, ein System umfassend ein Bauteil, eine Welle und einen erfindungsgemäßen Sicherungsring und ein Verfahren zur Sicherung eines Bauteils auf einer Welle mit einem Sicherungsring.

### STAND DER TECHNIK

Sicherungsringe zur Sicherung eines Bauteils auf einer Welle werden dazu genutzt Bauteile auf einer rotierenden Welle zu sichern. Dazu umfasst der Sicherungsring ein erstes Ende und ein zweites Ende. Zwischen dem ersten Ende und dem zweiten Ende ist eine Lücke. Auf diese Weise kann der Sicherungsring aufgebogen werden, um den Radius des Sicherungsrings zu vergrößern.

Um ein Bauteil auf der Welle zu sichern, wird der Sicherungsring in einer Nut der Welle vor dem Bauteil angeordnet. Dabei liegt eine Seite des Bauteils an einer Fläche des Sicherungsrings an. Zudem ist der Durchmesser des Sicherungsrings kleiner als der Durchmesser der Welle, sodass der Sicherungsring und damit das Bauteil fest in der Nut sitzt. Auf diese Weise ist das Bauteil auch bei Rotation der Welle auf der Welle gesichert. Der Vorteil des Sicherungsrings ist es, dass der Sicherungsring für eine Demontage des Bauteil wieder von der Welle abgenommen werden kann.

Mit zunehmender Drehzahl der Welle und damit auch des Sicherungsrings wirken Fliehkräfte auf den Sicherungsring. Hierbei kommt es bei hohen Drehzahlen zu einem Aufbiegen des Sicherungsrings, sodass der Durchmesser des Sicherungsrings größer wird. Dadurch sitzt der Sicherungsring nicht mehr fest in der Nut und löst sich von der Welle ab. Folglich ist auch das Bauteil nicht mehr gesichert. Mithin weisen Sicherungsringe häufig nur eine geringe Drehzahlfestigkeit auf, sodass eine Sicherung des Bauteils nur bis zu einer niedrigen Drehzahl gewährleistet ist.

Aus der US 2022/0065280 A1 ist eine Lösung zur Steigerung der Drehzahlfestigkeit bekannt. Hierbei weist der Sicherungsring zwei Windungen auf. Dabei weist die erste Windung eine Erhöhung auf, während die zweite Windung eine Öffnung aufweist. Die Erhöhung der ersten Windung greift dabei in die Öffnung der zweiten Windung. Die Öffnung ist dabei größer als die Erhöhung, sodass die Erhöhung mit einem gewissen Spiel in der Öffnung sitzt. Durch das Spiel der Erhöhung in der Öffnung ist die Vergrößerung und die Verkleinerung des Durchmessers des Sicherungsrings begrenzt.

Jedoch wird für die in US 2022/0065280 A1 vorgeschlagene Lösung eine zweite Windung benötigt, sodass die Materialkosten steigen. Zudem ist die Handhabung erschwert, da der Sicherungsring aus der US 2022/0065280 A1 keine Öffnung aufweist, mit der der Sicherungsring einfach aufgebogen werden kann. Ferner ist die Drehzahlfestigkeit durch die Erhebung beschränkt, da bei zu hohen Drehzahlen sich die Erhebung aus der Öffnung der zweiten Windung lösen kann.

Ausgehend von diesem Stand der Technik ist es die Aufgabe der vorliegenden Erfindung, einen kostengünstigen Sicherungsring vorzuschlagen, der eine einfache Handhabung für die Montage und Demontage des Sicherungsrings und eine gleichzeitig gute Sicherung bei hohen Drehzahlen gewährleistet.

### ZUSAMMENFASSUNG DER ERFINDUNG

Die oben genannte Aufgabe wird gemäß einem ersten Aspekt der Erfindung durch einen Sicherungsring zur Sicherung eines Bauteils auf einer Welle gelöst, wobei der Sicherungsring ein erstes Ende und ein zweites Ende umfasst, wobei zwischen dem ersten Ende und dem zweiten Ende eine Lücke ist, wobei der Sicherungsring mindestens ein Federelement umfasst.

Auf diese Weise kann der Sicherungsring kostengünstig sein, da der Sicherungsring wenig Material erfordert und einfach herzustellen ist. Ferner ist der Sicherungsring einfach handzuhaben und gewährleistet gleichzeitig eine gute Sicherung bei hohen Drehzahlen.

Der Sicherungsring kann aus einem Stahl, insbesondere einem Federstahl, oder Edelmetall sein. Beispielsweise kann der Sicherungsring Löcher für ein Greifwerkzeug aufweisen. Bevorzugt können die Löcher für ein Greifwerkzeug an dem ersten Ende und dem zweiten Ende angeordnet sein. Der Sicherungsring kann insbesondere ein Sprengring sein.

Der Sicherungsring kann eine Innenseite aufweisen. Die Innenseite kann glatt sein. Beispielsweise kann die Innenseite kein Gewinde aufweisen. Der Sicherungsring kann eine Außenseite aufweisen. Die Außenseite kann glatt sein. Beispielsweise kann die Außenseite kein Gewinde aufweisen. Der Abstand der Innenseite zur Außenseite kann die Breite des Sicherungsrings sein.

Der Sicherungsring kann eine radiale Richtung aufweisen. Beispielsweise kann sich die radiale Richtung vom Zentrum des Sicherungsrings zur Außenseite des Sicherungsrings erstrecken. Beispielsweise kann sich die radiale Richtung vom Zentrum zu der Außenseite erstrecken. Der Außenradius des Sicherungsrings kann vom Zentrum entlang der radialen Richtung zur Außenkante sein. Der Außendurchmesser kann von einer Außenkante durch das Zentrum zur gegenüberliegenden Außenkante sein. Der Sicherungsring kann in einem Querschnitt entlang der radialen Richtung einen rechteckigen Querschnitt aufweisen.

Der Sicherungsring kann eine axiale Richtung aufweisen. Die axiale Richtung kann senkrecht zur radialen Richtung sein. Die axiale Erstreckung des Sicherungsrings in axiale Richtung kann die Dicke des Sicherungsrings sein. Die Dicke kann kleiner als der Außendurchmesser sein. Die Dicke kann maximal 20% des Außendurchmesser entsprechen. Die Dicke kann beispielsweise die Erstreckung in axiale Richtung sein. Beispielsweise kann die Dicke die Materialdicke parallel zur axialen Achse sein. Die Dicke kann insbesondere der Abstand zwischen zwei in axiale Richtung beanstandete Flächen des Sicherungsrings sein. Die Dicke kann insbesondere nicht an dem mindestens einen Federelement bestimmbar sein.

Der Sicherungsring kann zur Sicherung des Bauteils auf der Welle ausgebildet sein. Somit kann der Sicherungsring beispielsweise auch bei hohen Drehzahlen ein Lösen des Bauteils von der Welle verhindern.

Das erste Ende und das zweite Ende können die räumliche Begrenzung des Sicherungsrings darstellen. Beispielsweise können das erste Ende und das zweite Ende Außenflächen des Sicherungsrings sein, die den Sicherungsring begrenzen können.

Zwischen dem ersten Ende und dem zweiten Ende ist die Lücke. Die Lücke kann eine räumliche Erstreckung zwischen dem ersten Ende und dem zweiten Ende sein. Beispielsweise kann die Lücke materialfrei sein. Zum Beispiel kann in der Lücke kein Festkörper, beispielweise Metall, sein. Zum Beispiel kann zwischen dem ersten Ende und dem zweiten Ende nur Luft sein.

Der Sicherungsring kann sich von dem ersten Ende bis zu dem zweiten Ende über einen Winkel von weniger als 360° erstrecken. Der Sicherungsring kann ein offener Kreis sein. Beispielsweise kann der Sicherungsring bis auf eine ihn unterbrechende Öffnung ringförmig ausgeführt sein. Der Sicherungsring kann nur eine Windung mit einer Lücke aufweisen. Über oder unter dem Sicherungsring kann sich kein weiteres mit dem Sicherungsring verbundenes Material befinden.

Das mindestens eine Federelement kann sich unter einer Belastung verformen. Bei Entlastung kann sich das mindestens eine Federelement zurückverformen. Das mindestens eine Federelement kann unter einer Belastung elastisch verformbar sein. Das mindestens eine Federelement kann eine Flachfeder sein. Das mindestens eine Federelement kann unter einer Belastung um eine Achse schwenken. Beispielsweise kann das mindestens eine Federelement unter einer Belastung um eine Achse an einem verbundenen Ende schwenken. Das verbundene Ende des mindestens einen Federelements kann mit weiteren Teilen des Sicherungsrings verbunden sein. Alternativ oder zusätzlich, kann das mindestens eine Federelement beispielsweise unter einer Belastung um eine Achse entlang der radialen Richtung schwenken.

Gemäß einem Ausführungsbeispiel kann das mindestens eine Federelement hervorstehend ausgebildet sein.

Auf diese Weise kann das mindestens eine Federelement besonders einfach und kostengünstig herstellbar sein. Zudem kann die Handhabung besonders einfach sein.

Das mindestens eine Federelement kann in axiale Richtung hervorstehen. Das mindestens eine Federelement kann sich zumindest teilweise in axiale Richtung erstrecken. Besonders bevorzugt kann sich das mindestens eine Federelement in axiale als auch in eine Umlaufrichtung erstrecken. Die Umlaufrichtung kann entlang der Innenseite verlaufen. Die Umlaufrichtung kann um die axiale Richtung herum verlaufen.

Das mindestens eine Federelement kann, insbesondere zumindest teilweise in axiale Richtung, aus einer Oberfläche des Sicherungsrings hervorstehen. Beispielsweise kann eine Oberfläche des Sicherungsrings eine Vergleichsebene bilden, wobei das mindestens eine Federelement aus der Vergleichsebene hervorstehend ausgebildet sein kann. Bevorzugt kann die Vergleichsebene einer Oberfläche des Sicherungsrings entsprechen, die zwischen der Innenseite und der Außenseite liegen kann. Die Vergleichsebene kann sich nur in radiale Richtung erstrecken. Beispielsweise kann die Vergleichsebene das mindestens eine Federelement nicht umfassen.

Beispielsweise kann das mindestens eine Federelement aus einer Oberfläche des Sicherungsrings hervorstehen.

Gemäß einem Ausführungsbeispiel kann das mindestens eine Federelement ein freies Ende aufweisen, wobei bevorzugt das freie Ende des mindestens einen Federelements der am weitesten hervorstehende Teil des mindestens einen Federelements sein kann.

Auf diese Weise kann das mindestens eine Federelement besonders einfach durch Stanzen und Prägen hergestellt werden, sodass der Sicherungsrings besonders kostengünstig sein kann.

Das freie Ende kann eine räumliche Begrenzung des mindestens einen Federelements sein. Das freie Ende kann mit keinen weiteren Teilen des Sicherungsrings verbunden sein. Das freie Ende kann zum Beispiel gegenüberliegend von dem verbundenen Ende an dem mindestens einen Federelement angeordnet sein. Das mindestens eine Federelement kann bogenförmig ausgebildet sein. Beispielsweise kann das mindestens eine Federelement von dem verbundenen Ende zum freien Ende bogenförmig ausgebildet sein.

Das mindestens eine Federelement kann beispielsweise bis auf das verbundene Ende vom Sicherungsring getrennt sein. Das mindestens eine Federelement kann beispielsweise in axiale Richtung gebogen sein.

Wenn das das freie Ende des mindestens einen Federelements der am weitesten hervorstehende Teil des mindestens einen Federelements sein kann, kann das Federelement besonders effizient sein.

Das mindestens eine Federelement kann vom verbundenen Ende zum freien Ende hin kontinuierlich immer weiter abstehen.

Gemäß einem Ausführungsbeispiel kann das mindestens eine Federelement in Umlaufrichtung in einem Winkel zur Umlaufrichtung verlaufen.

Auf diese Weise kann der Sicherungsring besonders einfach montierbar sein und besonders kostengünstig herstellbar sein.

Das mindestens eine Federelement kann in Umlaufrichtung in einem Winkel zur Umlaufrichtung von mehr als 0, bevorzugt von mehr als 0° bis 30°, besonders bevorzugt von 2° bis 25°, verlaufen. Das mindestens eine Federelement kann in Umlaufrichtung in einem Winkel zur Umlaufrichtung und zur axialen Richtung verlaufen. Das mindestens eine Federelement kann in Umlaufrichtung in einem Winkel zur Umlaufrichtung von mehr als 0°, bevorzugt von mehr als 0° bis 30°, besonders bevorzugt von 2° bis 25°, und zur axialen Richtung von weniger als 90°, bevorzugt von 60° bis weniger als 90°, besonders bevorzugt von 65° bis weniger als 90° verlaufen. Zum Beispiel kann das mindestens eine Federelement in einem Winkel zur Umlaufrichtung von mehr als 0°, bevorzugt von mehr als 0° bis 30°, besonders bevorzugt von 2° bis 25°, und zur axialen Richtung von weniger als 90°, bevorzugt von 60° bis weniger als 90°, besonders bevorzugt von 65° bis weniger als 90° verlaufen. Beispielsweise kann das mindestens eine Federelement in Umlaufrichtung oder entgegen der Umlaufrichtung zunehmend hervorstehend ausgebildet sein. Beispielsweise kann sich das mindestens eine Federelement teilweise in Umlaufrichtung und teilweise in axiale Richtung erstrecken. Beispielsweise kann sich das mindestens eine Federelement in einem Winkel von mindestens 80°-100°, bevorzugt von 85°-95°, besonders bevorzugt von 90° zur radialen Richtung erstrecken. Die Erstreckung des mindestens einen Federelements kann vom verbundene Ende zum freien Ende sein. Beispielsweise kann sich der Mittelpunkt einer Ebene des mindestens eine Federelements parallel zur radialen Richtung in axiale Richtung entlang der Umlaufrichtung ändern.

Beispielsweise kann der Abstand des mindestens eine Federelements in axiale Richtung in Bezug auf die Vergleichsebene in Umlaufrichtung oder entgegen der Umlaufrichtung zunehmen. Beispielsweise kann der Abstand des mindestens einen Federelements in axiale Richtung in Bezug auf die Vergleichsebene in Umlaufrichtung oder entgegen der Umlaufrichtung vom verbundenen Ende zum freien Ende zunehmen. Beispielsweise kann sich die Position des mindestens einen Federelements in axiale Richtung entlang der Umlaufrichtung vom verbundenen Ende zum freien Ende hin verändern.

Das mindestens eine Federelement erstreckt sich vom verbundenen Ende zum freien Ende zumindest teilweise in Umfangsrichtung. Auf diese Weise kann der Sicherungsring besonders einfach herstellbar und gut montierbar sein.

Gemäß einem Ausführungsbeispiel kann das freie Ende des mindestens einen Federelements abgerundet sein.

Auf diese kostengünstige Weise kann die Gefahr von Verletzungen und Schäden an der Welle oder dem Bauteil verhindert werden, sodass die Handhabung erleichtert werden kann.

Gemäß einem Ausführungsbeispiel kann das mindestens eine Federelement an der Innenseite des Sicherungsrings angeordnet sein.

Auf diese Weise kann das Federelement besonders einfach in die Nut und unterhalb des Bauteils eingebracht werden, sodass die Handhabung erleichtert werden kann. Zudem kann der Sicherungsring eine gute Sicherung bei hohen Drehzahlen gewährleisten.

Das mindestens eine Federelement kann ein Teil der Innenseite bilden. Das mindestens eine Federelement kann sich von der Innenseite des Sicherungsrings in Richtung der Außenseite erstrecken.

Gemäß einem Ausführungsbeispiel kann die Innenseite des Sicherungsrings in axiale Richtung gesehen kreisförmig sein.

Auf diese Weise kann der Sicherungsring besonders gut auf der Welle montierbar sein und zudem kann der Sicherungsring das Bauteil besonders gut sichern, da der Sicherungsring besonders eng auf der Welle sitzen kann.

Die Innenseite des Sicherungsrings kann bis auf die Unterbrechung durch die Lücke in axiale Richtung gesehen kreisförmig sein. Beispielsweise kann die Breite des Sicherungsrings in Umlaufrichtung konstant sein. Insbesondere kann die Breite des Sicherungsrings in radiale Richtung konstant sein. Zum Beispiel kann die Erstreckung des Sicherungsrings in radiale Richtung konstant sein. Das Federelement kann ein Teil der Innenseite sein, wobei insbesondere die Innenseite kreisförmig sein kann. Zum Beispiel kann der Sicherungsring einen konstanten Innenradius aufweisen, wenn das mindestens eine Federelement in der Ebene der Vergleichsebene liegen kann. Der Innenradius kann der Abstand vom Zentrum des Sicherungsrings zu Innenseite sein. Auf diese Weise kann die Montage des Sicherungsrings vereinfacht werden.

Beispielsweise kann das mindestens eine Federelement in Umlaufrichtung entsprechend dem Innenradius des Sicherungsrings gebogen sein. Beispielsweise kann der Sicherungsring einen konstanten Innenradius aufweisen.

Beispielsweise kann die Außenseite des Sicherungsrings in axiale Richtung gesehen kreisförmig sein. Beispielsweise kann der Sicherungsring einen konstanten Außenradius aufweisen.

Zum Beispiel kann die Innenseite des Sicherungsring und/oder die Außenseite des Sicherungsring in einem Winkel von 85°-95°, bevorzugt von 90°, zur radialen Richtung verlaufen. Zum Beispiel kann die Innenseite des Sicherungsring und/oder die Außenseite des Sicherungsring in einem Winkel von kleiner 5°, bevorzugt von kleiner 2°, besonders bevorzugt von 0°, zur Umfangsrichtung verlaufen.

Gemäß einem Ausführungsbeispiel kann sich das mindestens eine Federelement über 5°-35°, bevorzugt über 10°-30°, des Sicherungsrings erstrecken.

Auf diese Weise kann der Sicherungsring eine besonders gute Sicherung bei hohen Drehzahlen gewährleisten.

Das mindestens eine Federelement kann sich über 5°-35°, bevorzugt über 10°-30°, des Sicherungsrings in Umlaufrichtung erstrecken. Der Winkel von 5°-35°, bevorzugt von 10°-30°, kann dem Winkel entsprechen, der zwischen einer Linie ausgehend vom Zentrum zum freien Ende und einer weiteren Linie ausgehend vom Zentrum zum verbundenen Ende liegen kann. Der Winkel von 5°-35°, bevorzugt von 10°-30°, kann der Anteil des mindestens einen Federelements an der Innenseite entsprechen, wenn die Innenseite inklusive der Lücke 360° entsprechen kann.

Gemäß einem Ausführungsbeispiel kann sich das mindestens eine Federelement über 5%-70%, bevorzugt 20%-60%, der Breite erstrecken.

Auf diese Weise kann das mindestens eine Federelement besonders stabil sein, sodass das mindestens eine Federelement und auch der Sicherungsring eine gute Sicherung auch bei hohen Drehzahlen gewährleisten können.

Gemäß einem Ausführungsbeispiel kann der Sicherungsring mindestens eine Aussparung zur Aufnahme des mindestens einen Federelements umfassen.

Auf diese Weise kann das mindestens eine Federelement besonders einfach unter Belastung eingedrückt werden, sodass die Handhabung des Sicherungsrings erleichtert werden kann.

Die mindestens eine Aussparung kann zwischen der Innenseite und der Außenseite angeordnet sein. Insbesondere kann sich die mindestens eine Aussparung von der Innenseite beginnend zur Außenseite erstrecken.

Die mindestens eine Aussparung kann zur Aufnahme des mindestens einen Federelements die negative Form des mindestens einen Federelements aufweisen. Das mindestens eine Federelement und die mindestens eine Aussparung können so ausgebildet sein, dass das mindestens eine Federelement unter einer, insbesondere axialen, Belastung in der mindestens einen Aussparung angeordnet ist. Das mindestens eine Federelement und die mindestens eine Aussparung können so ausgebildet sein, dass das mindestens eine Federelement unter einer, insbesondere axialen Kraft, in der mindestens einen Aussparung angeordnet ist, sodass der Sicherungsring eben ausgebildet sein kann. Das mindestens eine Federelement und die mindestens eine Aussparung können so ausgebildet sein, dass das mindestens eine Federelement unter einer, insbesondere axialen Kraft, in der mindestens einen Aussparung angeordnet ist, sodass das mindestens eine Federelement in axiale Richtung bündig mit der Oberfläche des Sicherungsrings sein kann.

Die mindestens eine Aussparung kann durch ein Herausbiegen des mindestens einen Federelements erzeugt sein.

Gemäß einem Ausführungsbeispiel kann der Sicherungsring monolithisch sein.

Auf diese Weise kann der Sicherungsring besonders kostengünstig hergestellt werden. Zudem kann der Sicherungsring keine Schwachstellen in Form von Verbindungsstellen zweier Materialien aufweisen, sodass der Sicherungsring besonders gut bei hohen Drehzahlen sicheren kann.

Der gesamte Sicherungsring und damit auch das mindestens eine Federelement können aus demselben Material gemacht sein. Der Sicherungsrings kann einstückig sein. Der Sicherungsring kann keine Fügestellen aufweisen.

Gemäß einem Ausführungsbeispiel kann der Sicherungsring mindestens zwei Federelemente umfassen.

Auf diese Weise kann eine besonders stabile Sicherung bei hohen Drehzahlen gewährleistet werden.

Besonders bevorzugt kann der Sicherungsring mindestens vier Federelemente umfassen

Die mindestens zwei Federelemente können die gleiche Form haben. Dadurch kann die Handhabung erleichtert sein.

Gemäß einem Ausführungsbeispiel können sich die mindestens zwei Federelemente in Umlaufrichtung des Sicherungsrings gesehen in unterschiedliche Richtungen erstrecken.

Auf diese Weise kann der Sicherungsring auch bei sehr hohen Drehzahlen eine stabile Sicherung gewährleisten.

Die Erstreckung der mindestens zwei Federelemente kann von dem verbundenen Ende zu dem offenen Ende sein. Beispielsweise können bei den mindestens zwei Federelementen die verbundenen Enden einander zugewandt angeordnet sein. Zum Beispiels können bei den mindestens zwei Federelementen die freien Enden voneinander abgewandt angeordnet sein. Beispielsweise kann in Umlaufrichtung zuerst das freie Ende des ersten der zwei Federelemente, dann das verbundene Ende des ersten der zwei Federelemente, dann das verbundene Ende des zweiten der zwei Federelemente und zuletzt das freie Ende des zweiten der zwei Federelemente angeordnet sein.

Das erste der mindestens zwei Federelemente kann sich im Uhrzeigersinn von seinem verbundenen Ende zum offenen Ende erstrecken, während das zweite der mindestens zwei Federelemente sich gegen den Uhrzeigersinn von seinem verbundenen Ende zum offenen Ende erstrecken kann.

Bevorzugt kann der Sicherungsring mindestens drei Federelemente, besonders bevorzugt mindestens 4 Federelemente, umfassen, wobei sich die mindestens drei Federelemente in Umlaufrichtung des Sicherungsrings gesehen alternierend in unterschiedliche Richtungen erstrecken.

Gemäß einem Ausführungsbeispiel können die mindestens zwei Federelemente in Umlaufrichtung des Sicherungsrings äquidistant angeordnet sein.

Auf diese Weise kann die Kraftverteilung im Sicherungsring besonders gleichmäßig sein, sodass der Sicherungsring besonders gut bei hohen Drehzahlen sichern kann.

Die mindestens zwei Federelemente können beispielsweise in Umlaufrichtung des Sicherungsrings äquidistant angeordnet sein, wenn zwischen den mindestens zwei Federelementen der gleiche Winkel vorliegen kann. Der Winkel zwischen den mindestens zwei Federelementen kann beispielsweise am verbundenen Ende bestimmt werden. Alternativ kann der Winkel zwischen den mindestens zwei Federelementen beispielsweise an dem im Uhrzeigersinn zuerst angeordneten Ende, also beispielsweise dem freien Ende oder dem verbundenen Ende, der mindestens zwei Federelemente bestimmt werden. Insbesondere wenn sich die mindestens zwei Federelemente in Umlaufrichtung des Sicherungsrings gesehen in unterschiedliche Richtungen erstrecken, kann beispielsweise der Winkel zwischen dem offenen Ende des ersten der mindestens zwei Federelemente und dem verbundenen Ende des zweiten der mindestens zwei Federelemente bestimmt werden. Besonders vorteilhaft kann der Winkel zwischen den Mittelpunkten der mindestens zwei Federelemente bestimmt werden. Beispielsweise können bei zwei Federelementen die die Mittelpunkte der zwei Federelemente jeweils 180° voneinander entfernt sein. Beispielsweise können bei vier Federelementen die Mittelpunkte der vier Federelemente jeweils 90° voneinander entfernt sein.

Gemäß einem Ausführungsbeispiel kann der Sicherungsring gestanzt und geprägt sein.

Auf diese Weise kann der Sicherungsring besonders einfach und kostengünstig sein. Ferner können die mechanischen Eigenschaften über den gesamten Sicherungsring gleichmäßig sein, sodass der Sicherungsring auch bei hohen Drehzahlen eine gute Sicherung gewährleisten kann.

Die oben genannte Aufgabe wird gemäß einem zweiten Aspekt der Erfindung durch ein System umfassend ein Bauteil, eine Welle und einen erfindungsgemäßen Sicherungsring gelöst, wobei die Welle eine Nut umfasst, wobei das Bauteil eine Öffnung aufweist, wobei die Welle innerhalb der Öffnung angeordnet ist, wobei der Sicherungsring in der Nut angeordnet ist, wobei der Sicherungsring das Bauteil auf der Welle sichert,
a) wobei das mindestens eine Federelement unterhalb des Bauteils angeordnet ist und/oder
b) wobei die Welle mindestens einen Vorsprung oberhalb der Nut umfasst, und wobei das mindestens eine Federelement unterhalb des Vorsprungs angeordnet ist.

Auf diese Weise kann mit dem System in kostengünstiger Weise, eine gute Sicherung bei hohen Drehzahlen gewährleistet werden. Zudem ist das System einfach zu handhaben. Durch die Anordnung des mindestens einen Federelements unterhalb des Bauteils und/oder des mindestens einen Vorsprungs, drücken die Fliehkräfte auf den Sicherungsring so, dass das mindestens eine Federelement gegen das Bauteil und/oder den mindestens einen Vorsprung gedrückt wird. Mithin drücken die Fliehkräfte das mindestens eine Federelement gegen das Bauteil und/oder den mindestens einen Vorsprung, sodass das Bauteil und/oder der mindestens einen Vorsprung verhindert, dass das mindestens eine Federelement und damit auch der Sicherungsring durch die Fliehkräfte aufgeweitet wird. Dadurch kann das Bauteil mit dem Sicherungsring auch bei hohen Drehzahlen gut gesichert werden.

Die Welle kann ein rotierendes, insbesondere längliches, Element sein. Die Welle kann einen kreisförmigen Querschnitten aufweisen. Die Welle kann zur Übertragung von Drehbewegungen und/oder Drehmomenten ausgebildet sein.

Das Bauteil kann beispielsweise ein Lager sein.

Die Nut kann eine Vertiefung zur teilweisen Aufnahme des Sicherungsrings sein.

Die Öffnung kann durch das gesamte Bauteil hindurchgehen. Die Öffnung kann einen größeren Querschnitt als die Welle aufweisen.

Der Sicherungsring sichert das Bauteil auf der Welle. Beispielsweise kann der Sicherungsring eine Anlagefläche aufweisen, wobei das Bauteil an der Anlagefläche anliegen kann, wobei die Anlagefläche eine Bewegung des Bauteils entlang der Längsachse der Welle verhindern kann.

Das mindestens eine Federelement kann radial unterhalb des Bauteils angeordnet sein. Beispielsweise kann das mindestens eine Federelement innerhalb der Nut und unterhalb des Bauteils angeordnet sein. Das Bauteil kann teilweise über der Nut angeordnet sein.

Der mindestens einen Vorsprung kann eine Erstreckung der Welle in axiale Richtung oberhalb der Nut sein. Der mindestens eine Vorsprung kann sich über 360° erstrecken. Alternativ kann die Welle mehrere Vorsprünge aufweisen.

Die oben genannte Aufgabe wird gemäß einem dritten Aspekt der Erfindung durch ein Verfahren zur Sicherung eines Bauteils auf einer Welle mit einem erfindungsgemäßen Sicherungsring gelöst, wobei das Bauteil eine Öffnung umfasst, wobei die Welle ein Nut umfasst,
- bei dem die Welle in der Öffnung angeordnet wird,
- bei dem der Sicherungsring aufgeweitet wird,
- bei der Sicherungsring gegen das Bauteil gedrückt wird, sodass das mindestens eine Federelement entgegen der Federkraft zurückgedrückt wird,
- bei dem der Sicherungsring in der Nut angeordnet wird,
- bei dem das mindestens eine Federelement zurückfedert, sodass das mindestens eine Federelement unterhalb des Bauteils angeordnet ist.

Mit dem Verfahren wird in kostengünstiger Weise, eine gute Sicherung bei hohen Drehzahlen gewährleistet. Zudem ist das Verfahren einfach zu handhaben.

Um die Welle in der Öffnung anzuordnen, kann die Welle in die Öffnung eingeführt werden und/oder die Öffnung über die Welle gezogen werden.

Der Sicherungsring kann beispielsweise mit einer Zange aufgeweitet werden. Das Aufweiten des Sicherungsrings kann zu einer Vergrößerung des Durchmessers des Sicherungsrings führen.

Der Sicherungsring wird gegen das Bauteil gedrückt wird, sodass das mindestens eine Federelement entgegen der Federkraft zurückgedrückt wird. Beispielsweise kann eine Belastung auf den Sicherungsring aufgebracht werden bis der Sicherungsring eine ebene Oberfläche bilden kann.

Die oben genannte Aufgabe wird gemäß einem vierten Aspekt der Erfindung durch die Verwendung eines erfindungsgemäßen Sicherungsrings zur Sicherung eines Bauteils auf einer Welle gelöst.

Weitere Aufgaben, Merkmale, Vorteile und Aspekte der vorliegenden Erfindung werden für den Fachmann aus der folgenden Beschreibung und den beigefügten Ansprüchen ersichtlich. Es sollte jedoch verstanden werden, dass die folgende Beschreibung, die beigefügten Ansprüche und die spezifischen Beispiele, die bevorzugte Ausführungsformen der Anwendung zeigen, nur zur Veranschaulichung gegeben werden. Verschiedene Änderungen und Modifikationen im Rahmen des Geistes und des Umfangs der offengelegten Erfindung werden dem Fachmann beim Lesen der folgenden Ausführungen ohne weiteres einleuchten.

### DEFINITIONEN

Die folgenden Ausdrücke haben im Allgemeinen vorzugsweise die nachstehend aufgeführten Bedeutungen, sofern sich aus dem Kontext, in dem sie verwendet werden, nichts anderes ergibt.

Der hier verwendete Ausdruck "umfassen" schließt neben seiner wörtlichen Bedeutung auch die Ausdrücke "im Wesentlichen bestehen aus" und "bestehen aus" ein und bezieht sich speziell auf diese. Somit bezieht sich der Ausdruck "umfassen" sowohl auf Ausführungsformen, bei denen der Gegenstand, der speziell aufgeführte Elemente "umfasst", keine weiteren Elemente umfasst, als auch auf Ausführungsformen, bei denen der Gegenstand, der speziell aufgeführte Elemente "umfasst", weitere Elemente umfassen kann und/oder tatsächlich umfasst. Ebenso ist der Ausdruck "haben" als der Ausdruck "umfassen" zu verstehen, der auch die Ausdrücke "im Wesentlichen bestehen aus" und "bestehen aus" einschließt und sich auf diese bezieht. Der Ausdruck "bestehen im Wesentlichen aus" bezieht sich, soweit möglich, insbesondere auf Ausführungsformen, bei denen der Gegenstand neben den spezifisch aufgeführten Elementen, aus denen der Gegenstand im Wesentlichen besteht, 20 % oder weniger, insbesondere 15 % oder weniger, 10 % oder weniger oder insbesondere 5 % oder weniger weitere Elemente umfasst.

### FIGUREN

- Fig. 1: isometrische Darstellung eines Sicherungsrings;
- Fig. 2: isometrische Darstellung eines Sicherungsrings;
- Fig. 3: seitliche Darstellung eines Sicherungsrings;
- Fig. 4: Querschnitt eines Sicherungsrings;
- Fig. 5: Ansicht eines Sicherungsrings entlang der axialen Richtung;
- Fig. 6: Querschnitt eines Systems;
- Fig. 7: Querschnitt eines Systems.

### SPEZIELLE BESCHREIBUNG

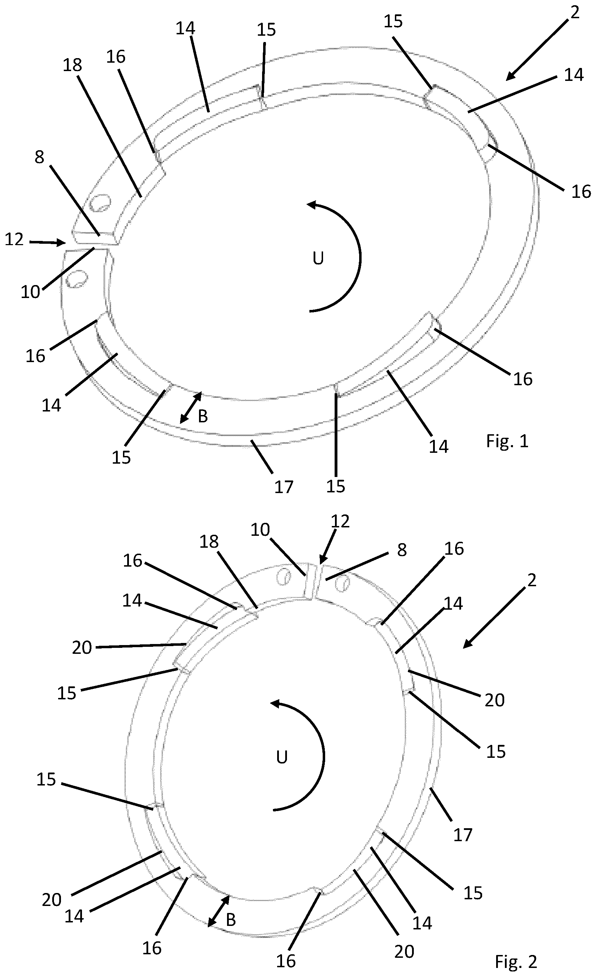

Fig. 1 zeigt eine isometrische Darstellung eines Sicherungsrings 2 zur Sicherung eines Bauteils 4 auf einer Welle 6.

Der Sicherungsring 2 umfasst ein erstes Ende 8 und ein zweites Ende 10. Zwischen dem ersten Ende 8 und dem zweiten Ende 10 ist eine Lücke 12. Der Sicherungsring 2 umfasst vier Federelemente 14.

Die vier Federelemente 14 sind hervorstehend ausgebildet. Die vier Federelemente 14 weisen jeweils ein freies Ende 16 auf. Zudem weisen die vier Federelemente jeweils ein verbundenes Ende 15 auf. Die freien Enden 16 der vier Federelemente 14 sind der am weitesten hervorstehende Teil der vier Federelemente 14. Die freien Ende 16 der vier Federelemente 14 sind abgerundet.

Die vier Federelemente 14 sind an der Innenseite 18 des Sicherungsrings 2 angeordnet. Der Sicherungsring 2 weist ferner eine Außenseite 17 auf.

Die vier Federelemente 14 erstrecken sich jeweils über 10°-30° des Sicherungsrings 2. Zudem erstrecken sich die vier Federelemente 14 jeweils über 20%-60% der radialen Breite B. Der Sicherungsring 2 umfasst vier Aussparungen 20 zur Aufnahme der vier Federelemente 14. Die vier Aussparungen 20 sind in Fig. 1 nur teilweise sichtbar.

Fig. 2 zeigt eine isometrische Darstellung eines Sicherungsrings zur Sicherung eines Bauteils 4 auf einer Welle 6.

Der Sicherungsring 2 umfasst ein erstes Ende 8 und ein zweites Ende 10. Zwischen dem ersten Ende 8 und dem zweiten Ende 10 ist eine Lücke 12. Der Sicherungsring 2 umfasst vier Federelemente 14.

Die vier Federelemente 14 sind hervorstehend ausgebildet. Die vier Federelemente 14 weisen jeweils ein freies Ende 16 auf. Zudem weisen die vier Federelemente jeweils ein verbundenes Ende 15 auf. Die freien Enden 16 der vier Federelemente 14 sind der am weitesten hervorstehende Teil der vier Federelemente 14. Die freien Ende 16 der vier Federelemente 14 sind abgerundet.

Die vier Federelemente 14 sind an der Innenseite 18 des Sicherungsrings 2 angeordnet. Der Sicherungsring 2 weist ferner eine Außenseite 17 auf.

Die vier Federelemente 14 erstrecken sich jeweils über 10°-30° des Sicherungsrings 2. Zudem erstrecken sich die vier Federelemente 14 jeweils über 20%-60% der radialen Breite B.

Der Sicherungsring 2 umfasst vier Aussparungen 20 zur Aufnahme der vier Federelemente 14.

Der in Fig. 1 gezeigte Sicherungsring 2 und der in Fig. 2 gezeigte Sicherungsring 2 sind monolithisch. Zudem erstrecken sich jeweils zwei der vier Federelemente 14 in Umlaufrichtung U des Sicherungsrings 2 gesehen in unterschiedliche Richtungen. So erstrecken sich beispielsweise die beiden an dem ersten Ende 8 und dem zweiten Ende 10 angeordneten Federelemente 14 in entgegengesetzte Richtungen.

Die vier Federelemente 14 sind in Umlaufrichtung U des Sicherungsrings 2 äquidistant angeordnet.

Der Sicherungsring 2 ist gestanzt und geprägt.

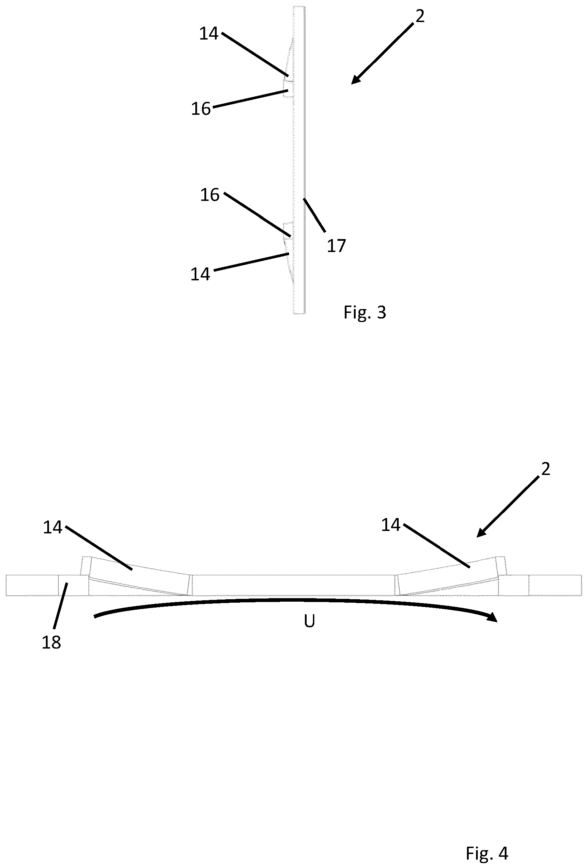

Fig. 3 zeigt eine seitliche Darstellung eines Sicherungsrings zur Sicherung eines Bauteils 4 auf einer Welle 6.

Der Sicherungsring 2 umfasst ein erstes Ende 8 und ein zweites Ende 10. Zwischen dem ersten Ende 8 und dem zweiten Ende 10 ist eine Lücke 12. Der Sicherungsring 2 umfasst vier Federelemente 14.

Die vier Federelemente 14 sind hervorstehend ausgebildet. Die vier Federelemente 14 weisen jeweils ein freies Ende 16 auf. Zudem weisen die vier Federelemente jeweils ein verbundenes Ende 15 auf. Die freien Enden 16 der vier Federelemente 14 sind der am weitesten hervorstehende Teil der vier Federelemente 14. Die freien Ende 16 der vier Federelemente 14 sind abgerundet.

Die vier Federelemente 14 sind an der Innenseite 18 des Sicherungsrings 2 angeordnet. Der Sicherungsring 2 weist ferner eine Außenseite 17 auf.

Die vier Federelemente 14 erstrecken sich jeweils über 10°-30° des Sicherungsrings 2. Zudem erstrecken sich die vier Federelemente 14 jeweils über 20%-60% der radialen Breite B.

Der Sicherungsring 2 umfasst vier Aussparungen 20 zur Aufnahme der vier Federelemente 14.

Der Sicherungsring 2 ist monolithisch. Zudem erstrecken sich jeweils zwei der vier Federelemente 14 in Umlaufrichtung U des Sicherungsrings 2 gesehen in unterschiedliche Richtungen. So erstrecken sich beispielsweise die beiden an dem ersten Ende 8 und dem zweiten Ende 10 angeordneten Federelemente 14 in entgegengesetzte Richtungen.

Die vier Federelemente 14 sind in Umlaufrichtung U des Sicherungsrings 2 äquidistant angeordnet.

Der Sicherungsring 2 ist gestanzt und geprägt.

Fig. 4 zeigt einen Querschnitt eines Sicherungsrings 2. Die Federelemente 14 verlaufen in Umlaufrichtung U in einem Winkel zur Umlaufrichtung U.

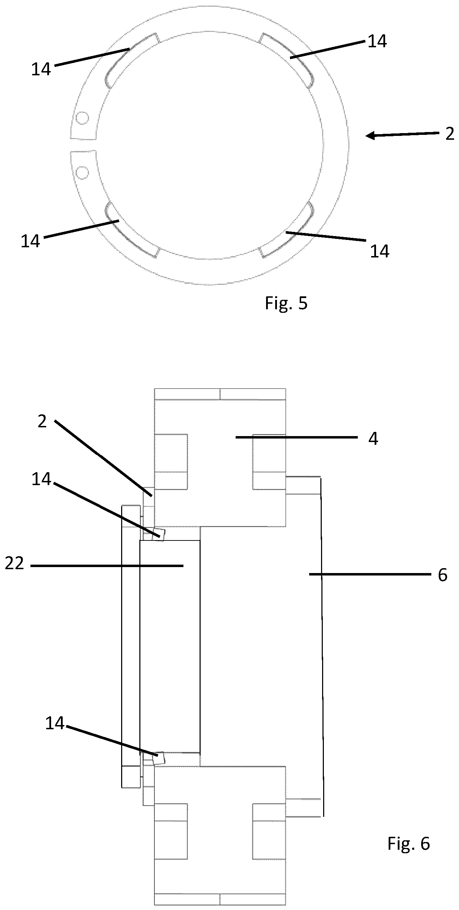

Fig. 5 zeigt eine Ansicht eines Sicherungsrings 2 entlang der axialen Richtung A. Die Innenseite 18 des Sicherungsrings 2 ist in axiale Richtung A gesehen kreisförmig. Die axiale Richtung A zeigt aus dem Blatt heraus.

Fig. 6 zeigt einen Querschnitt eines Systems. Das System umfasst ein Bauteil 4, eine Welle 6 und einen Sicherungsring 2. Die Welle 6 umfasst eine Nut 22. Das Bauteil 4 weist eine Öffnung 24 auf. Die Welle 6 ist innerhalb der Öffnung 24 angeordnet. Der Sicherungsring 2 ist in der Nut 22 angeordnet. Der Sicherungsring 2 sichert das Bauteil 4 auf der Welle 6. Die Federelemente 14 sind unterhalb des Bauteils 4 angeordnet.

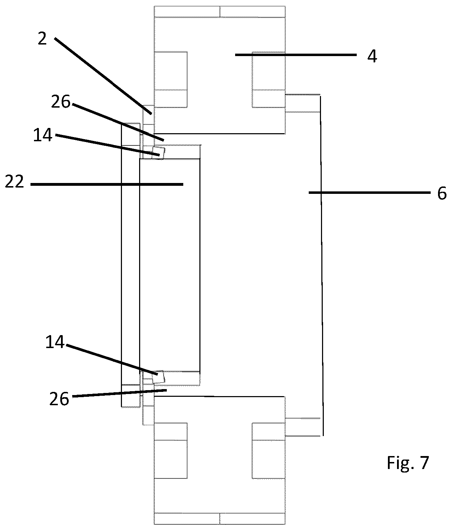

Fig. 7 zeigt einen Querschnitt eines Systems. Das System umfasst ein Bauteil 4, eine Welle 6 und einen Sicherungsring 2. Die Welle 6 umfasst eine Nut 22. Das Bauteil 4 weist eine Öffnung 24 auf. Die Welle 6 ist innerhalb der Öffnung 24 angeordnet. Der Sicherungsring 2 ist in der Nut 22 angeordnet. Der Sicherungsring 2 sichert das Bauteil 4 auf der Welle 6. Die Welle 6 umfasst einen Vorsprung 26 oberhalb der Nut 22, und die Federelemente 14 sind unterhalb des Vorsprungs 26 angeordnet.

## Patentansprüche

1. Sicherungsring (2) zur Sicherung eines Bauteils (4) auf einer Welle (6),
wobei der Sicherungsring (2) ein erstes Ende (8) und ein zweites Ende (10) umfasst, wobei zwischen dem ersten Ende (8) und dem zweiten Ende (10) eine Lücke (12) ist,
**dadurch gekennzeichnet, dass**
der Sicherungsring (2) mindestens ein Federelement (14) umfasst.

2. Sicherungsring nach Anspruch 1,
**dadurch gekennzeichnet, dass**
das mindestens eine Federelement (14) hervorstehend ausgebildet ist.

3. Sicherungsring nach Anspruch 1 oder 2,
**dadurch gekennzeichnet, dass**
das mindestens eine Federelement (14) ein freies Ende (16) aufweist,
wobei bevorzugt das freie Ende (16) des mindestens einen Federelements (14) der am weitesten hervorstehende Teil des mindestens einen Federelements (14) ist.

4. Sicherungsring nach einem der Ansprüche 1 bis 3,
**dadurch gekennzeichnet, dass**
das mindestens eine Federelement (14) in Umlaufrichtung (U) in einem Winkel zur Umlaufrichtung (U) verläuft.

5. Sicherungsring nach einem der Ansprüche 1 bis 4,
**dadurch gekennzeichnet, dass**
das mindestens eine Federelement (14) an der Innenseite (18) des Sicherungsrings (2) angeordnet ist.

6. Sicherungsring nach einem der Ansprüche 1 bis 5,
**dadurch gekennzeichnet, dass**
die Innenseite (18) des Sicherungsrings (2) in axiale Richtung gesehen kreisförmig ist.

7. Sicherungsring nach einem der Ansprüche 1 bis 6,
**dadurch gekennzeichnet, dass**
sich das mindestens eine Federelement (14) über 5°-35°, bevorzugt über 10°-30°, des Sicherungsrings (2) erstreckt.

8. Sicherungsring nach einem der Ansprüche 1 bis 7,
**dadurch gekennzeichnet, dass**
sich das mindestens eine Federelement (14) über 5%-70%, bevorzugt 20%-60%, der radialen Breite (B) erstreckt.

9. Sicherungsring nach einem der Ansprüche 1 bis 8,
**dadurch gekennzeichnet, dass**
der Sicherungsring (2) mindestens eine Aussparung (20) zur Aufnahme des mindestens einen Federelements (14) umfasst.

10. Sicherungsring nach einem der Ansprüche 1 bis 9,
**dadurch gekennzeichnet, dass**
der Sicherungsring (2) mindestens zwei Federelemente (14) umfasst.

11. Sicherungsring nach Anspruch 10,
**dadurch gekennzeichnet, dass**
die mindestens zwei Federelemente (14) sich in Umlaufrichtung (U) des Sicherungsrings (2) gesehen in unterschiedliche Richtungen erstrecken.

12. Sicherungsring nach Anspruch 10 oder 11,
**dadurch gekennzeichnet, dass**
die mindestens zwei Federelemente (14) in Umlaufrichtung (U) des Sicherungsrings (2) äquidistant angeordnet sind.

13. Sicherungsring nach einem der Ansprüche 1 bis 12,
**dadurch gekennzeichnet, dass**
der Sicherungsring (2) gestanzt und geprägt ist.

14. System umfassend ein Bauteil (4), eine Welle (6) und einen Sicherungsring (2) nach einem der Ansprüche 1 bis 13,
wobei die Welle (6) eine Nut (22) umfasst,
wobei das Bauteil (4) eine Öffnung (24) aufweist,
wobei die Welle (6) innerhalb der Öffnung (24) angeordnet ist,
wobei der Sicherungsring (2) in der Nut (22) angeordnet ist,
wobei der Sicherungsring (2) das Bauteil (4) auf der Welle (6) sichert,
a) wobei das mindestens eine Federelement (14) unterhalb des Bauteils (4) angeordnet ist und/oder
b) wobei die Welle (6) mindestens einen Vorsprung (26) oberhalb der Nut (22) umfasst, und
wobei das mindestens eine Federelement (14) unterhalb des mindestens einen Vorsprungs (26) angeordnet ist.

15. Verfahren zur Sicherung eines Bauteils (4) auf einer Welle (6) mit einem Sicherungsring (2) nach einem der Ansprüche 1 bis 13,
wobei das Bauteil (4) eine Öffnung (24) umfasst,
wobei die Welle (6) eine Nut (22) umfasst,
• bei dem die Welle (6) in der Öffnung (24) angeordnet wird,
• bei dem der Sicherungsring (2) aufgeweitet wird,
• bei der Sicherungsring (2) gegen das Bauteil (4) gedrückt wird, sodass das mindestens eine Federelement (14) entgegen der Federkraft zurückgedrückt wird,
• bei dem der Sicherungsring (2) in der Nut (22) angeordnet wird,
• bei dem das mindestens eine Federelement (14) zurückfedert, sodass das mindestens eine Federelement (14) unterhalb des Bauteils (4) angeordnet ist.
